# EUROPEAN PATENT APPLICATION

(11) **EP 2 093 392 A2**
(43) Date of publication of application: **26.08.2009**
(21) Application number: 09002279.9
(22) Date of filing: 18.02.2009
(51) Int. Cl.: F01L 13/00, F01L 1/18

(54) **Four-stroke cycle internal combustion engine**

(30) Priority: 19.02.2008 JP 2008037235
(71) Applicant: Yamaha Hatsudoki Kabushiki Kaisha, Iwata-shi, Shizuoka-ken 438-8501 (JP)
(72) Inventor: Fujita, Hideo, Iwata-shi Shizuoka-ken 438-8501 (JP)
(74) Representative: Grünecker, Kinkeldey, Stockmair & Schwanhäusser Anwaltssozietät

(57) **Abstract**

There is provided a four-stroke cycle internal combustion engine in which an amount of valve lift is switchable in more multiple steps according to an operating range. In a four stroke cycle internal combustion engine 1 including an intake valve 7, an exhaust valve 6, and a valve driving device 8 open/close-driving the intake valve 7 and the exhaust valve 6, at least one of the intake valve 7 and the exhaust valve 6 is provided in plurality, and the valve driving device 8 includes a first and a second variable valve system 26, 26' performing multi-step switching control of at least one of an opening/closing timing and an amount of lift of the valve provided in plurality, independently on a per valve basis

## Description

### BACKGROUND OF THE INVENTION

### 1. FIELD OF THE INVENTION

The present invention relates to a four-stroke cycle internal combustion engine including a plurality of intake vales and exhaust valves, more particularly, to switching control of an amount of lift and the opening/closing timing of each of the valves.

### 2. DESCRIPTION OF THE RELATED ART

Some of four-stroke cycle internal combustion engines is provided with a valve system which switches an amount of lift of each intake valve to a large amount or a small amount depending on a high speed range or a low speed range (see Japanese Patent Application Laid-open No. 2002-303109, for instance).

In the conventional internal combustion engine described above, the amounts of lift of two intake valves per cylinder are switched depending on the high speed range or the low speed range, but the amounts of lift of the both intake valves are always switched to amounts equal to each other. However, there has been a demand for a technique to enable the switching of the amount of lift in more multiple steps according to an intended use, an operating range, and so on of the internal combustion engine.

### SUMMARY OF THE INVENTION

The present invention was made in view of the above-described conventional circumstances, and has an object to provide a four-stroke cycle internal combustion engine in which an amount of lift is switchable in more multiple steps according to an operating range.

The present invention is a four-stroke cycle internal combustion engine including an intake valve, an exhaust valve, and a valve driving device open/close-driving the intake valve and the exhaust valve, wherein: at least one of the intake valve and the exhaust valve is provided in plurality; and the valve driving device includes a variable valve system performing multi-step switching control of at least one of an opening/closing timing and an amount of lift of the valve provided in plurality, independently on a per valve basis.

In a preferable embodiment of the present invention, the variable valve system includes: a cam nose which is provided in plurality per one valve; and a transmission switching mechanism transmitting only a driving force of one of the cam noses to the valve.

In another preferable embodiment of the present invention, the transmission switching mechanism is of a hydraulic type and includes a hydraulic cylinder mechanism, a hydraulic pressure supply path through which a hydraulic pressure is supplied to the hydraulic cylinder mechanism, and a hydraulic pressure control valve controlling the supply and discharge of the hydraulic pressure through the hydraulic pressure supply path.

In the present invention includes the variable valve system which performs the multi-step switching control of at least one of the opening/closing timing and the amount of lift of the valve provided in plurality, independently on a per valve basis. In the above-described embodiment of the present invention includes the cam nose provided in plurality per one valve and the transmission switching mechanism transmitting only the driving force of one of the cam noses to the valve. In the above-described another embodiment of the present invention, the transmission switching mechanism is of the hydraulic type and includes the hydraulic cylinder mechanism, the hydraulic pressure supply path through which the hydraulic pressure is supplied to the hydraulic cylinder mechanism, and the hydraulic pressure control valve controlling the supply and the discharge of the hydraulic pressure through the hydraulic pressure supply path. Therefore, as contrast to a conventional valve system which switches amounts of lift of all of a plurality of valves to the same amount, it is possible to achieve the switching control in more multiple steps, which can realize the control appropriate for a larger number of operating ranges.

In still another preferable embodiment of the present invention , a first intake valve and a second intake valve are provided; and the variable valve system includes: a first cam nose and a second cam nose provided for the first intake valve; a third cam nose and a fourth cam nose provided for the second intake valve; a first transmission switching mechanism of a hydraulic cylinder type transmitting a driving force of one of the first cam nose and the second cam nose to the first intake valve; and a second transmission switching mechanism of a hydraulic cylinder type transmitting a driving force of one of the third cam nose and the fourth cam nose to the second intake valve.

The above-described still another embodiment of the present invention includes the first and second cam noses for the first intake valve and the third and fourth cam noses for the second intake valve, and the driving forces of the first and second cam noses are selectively transmitted to the first intake valve, and the driving forces of the third and fourth cam noses are selectively transmitted to the second intake valve. This enables two-step switching of the amount of lift or the like of each of the first intake valve and the second intake valve, resulting in four-step switching as a whole, which can realize the control appropriate for a larger number of operating ranges.

In still another preferable embodiment of the present invention, the first transmission switching mechanism and the second transmission switching mechanism include: a first and a second rocker arm and a third and a fourth rocker arm rockably driven by the first and second cam noses and the third and fourth cam noses; a first and a second cylinder portion formed in a cam carrier pivotally supporting a portion, of an intake camshaft, between the first and second cam noses and the third and fourth cam noses; a first and a second piston slidably disposed in the first and second cylinder portions; and a first and a second lock pin reciprocatably driven by the first and second pistons to be engaged with or disengaged from the first or second rocker arm and the third or fourth rocker arm.

In the above-described still another embodiment of the present invention, the first and second cylinder portions are formed in the cam carrier pivotally supporting the intake camshaft, the first and second pistons are disposed in the first and second cylinder portions, the first and second lock pins are reciprocated by the first and second pistons to be engaged with or disengaged from the first or second rocker arm and the third or fourth rocker arm. Therefore, it is possible to realize the four-step switching.

In still another preferable embodiment of the present invention, a cam profile of the first cam nose is set so that the first intake valve has a valve operating angle of 250° or more and is closed at a timing of 90° or larger after a bottom dead center, and a cam profile of the third cam nose is set so that an amount of lift of the second intake valve becomes 2 mm or less; and in a low speed /low load operating range, the variable valve system open/close-drives the first intake valve by the first cam nose and open/close-drives the second intake valve by the third cam nose.

In still another preferable embodiment of the present invention, the intake valve is provided in plurality; and at least one of the plural intake valves has a valve operating angle of 250° or more and is closed at a timing of 90° or larger after a bottom dead center, and an amount of lift of at least one of the remaining intake valves is 2 mm or less.

In the above-described still another embodiment of the present invention, in the low speed/low load operating range, the first intake valve has a valve operating angle of 250° or more and is closed at the timing of 90° or larger after the bottom dead center, and the amount of lift of the second intake valve is set to 2 mm or less. Therefore, the closing timing of the first intake valve is, what is called, late closing, and the second intake valve is closed substantially completely. This can greatly reduce a pumping loss in an intake stroke to improve fuel efficiency. Further, since an air intake via the second intake valve is set to substantially zero and an intake air can be sucked only via the first intake valve, it is possible to generate a swirl (horizontal swirl) in the cylinder, leading to good stirrability of an air-fuel mixture and as a result the stabilization of a combustion state, which enables lean burn. Therefore, also from this point of view, it is possible to improve fuel efficiency.

Further, in a high speed/high load operating range, the first cam for the first intake valve and the third cam for the second intake valve drive the first intake valve and the second intake valve so that the both valves have the operating angle of 250° or more and are closed at a timing of 90° or larger after the bottom dead center. This can improve charge efficiency to improve the peak power.

### BRIEF DESCRIPTION OF THE DRAWINGS

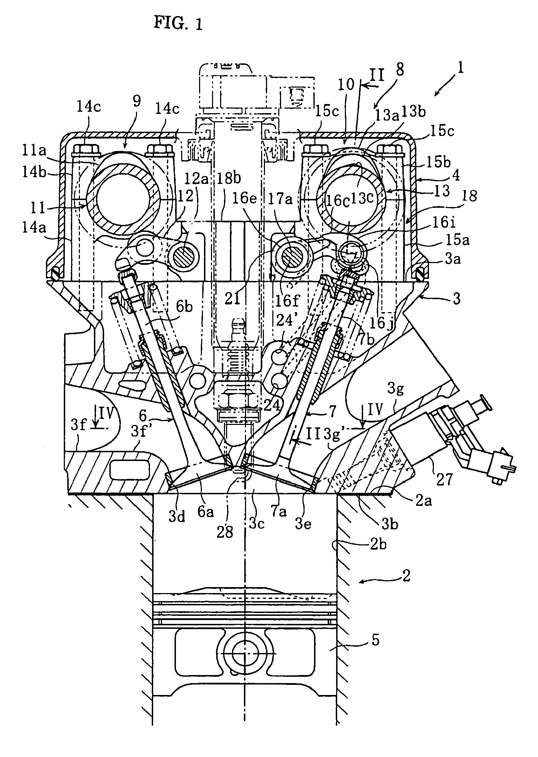

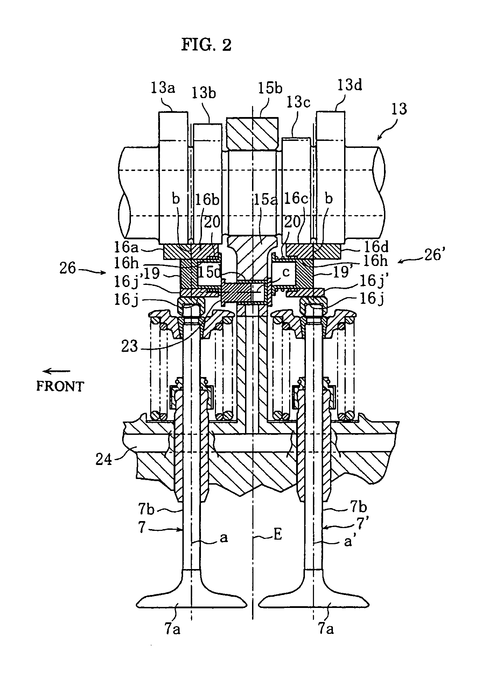

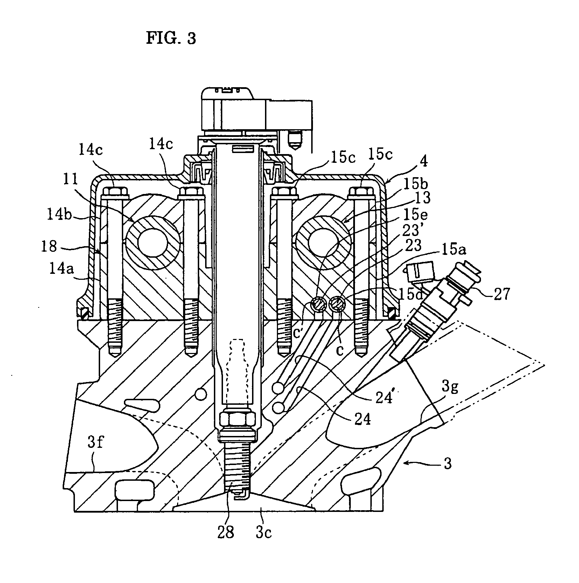

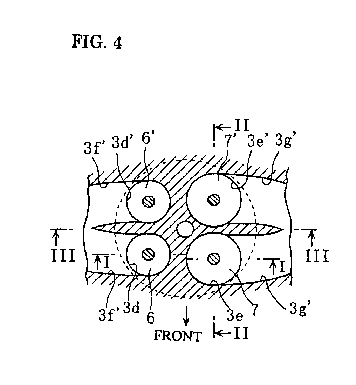

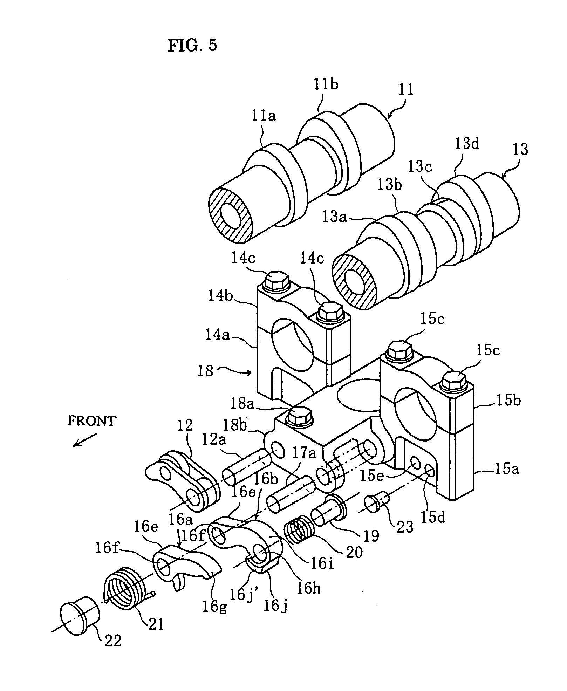

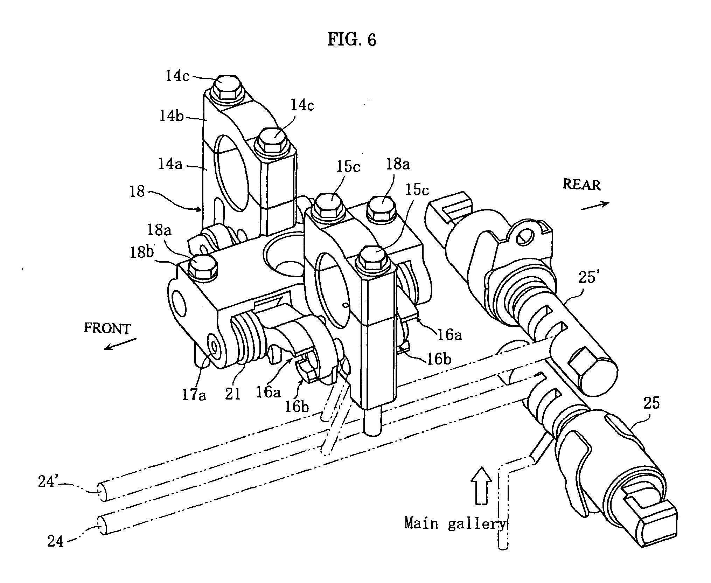

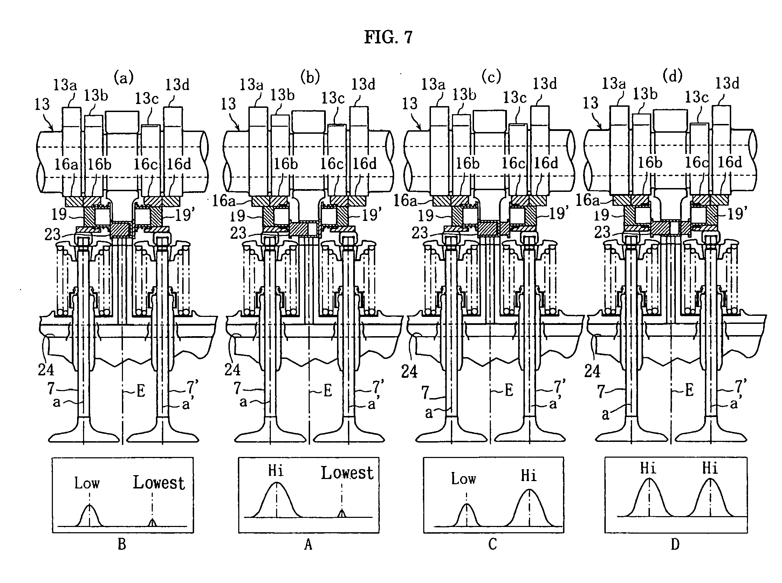

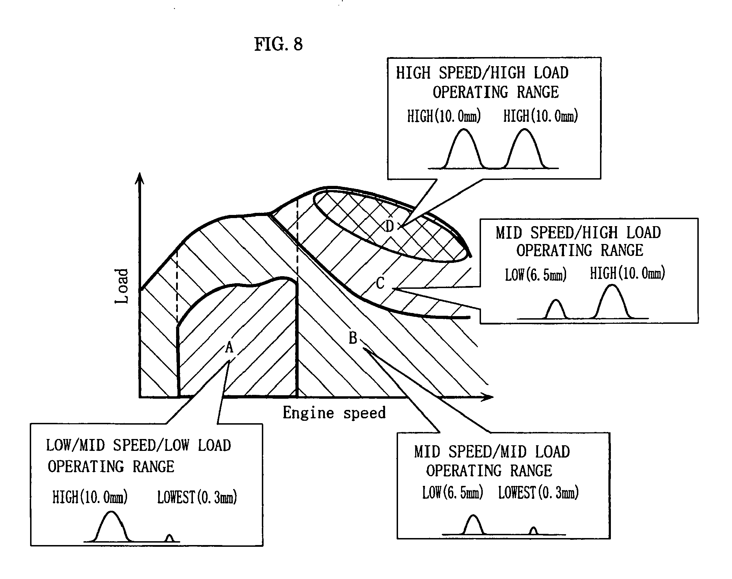

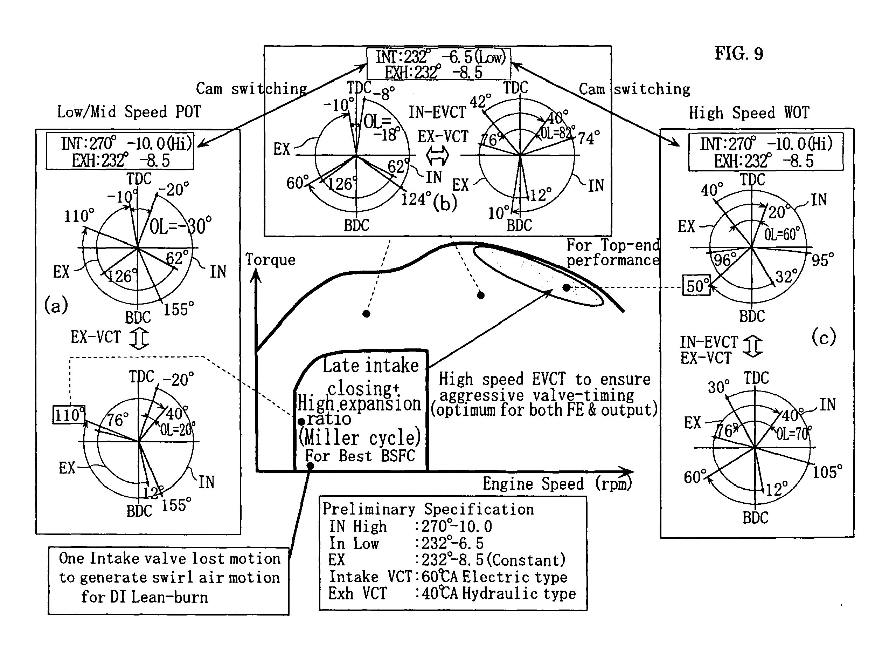

FIG. 1 is a front sectional view of a four-stroke cycle internal combustion engine according to one embodiment of the present invention (sectional view taken along the I-I line in FIG. 4; FIG. 2 is a side sectional view of the internal combustion engine (sectional view taken along the II-II line in FIG. 1 and FIG. 4); FIG. 3 is a front sectional view of the internal combustion engine (sectional view taken along the III-III line in FIG. 4); FIG. 4 is a plane sectional view of a port portion of the internal combustion engine (sectional view taken along the IV-IV line in FIG. 1); FIG. 5 is an exploded perspective view of a valve driving device of the internal combustion engine; FIG. 6 is a perspective view of the valve driving device of the internal combustion engine; FIG. 7(a) to FIG. 7(d) are explanatory views showing the operations of the valve driving device of the internal combustion engine; FIG. 8 is an engine speed-load characteristic chart, in which operating ranges of the valve driving device of the internal combustion engine are shown; and FIG. 9 is a chart showing the operating ranges and the valve timings of the valve driving device of the internal combustion engine.

### DETAILED DESCRIPTION OF THE PREFERRED EMBODIMENT

Hereinafter, an embodiment of the present invention will be described based on the appended drawings.

FIG. 1 to FIG. 9 are views used to describe a four-stroke cycle internal combustion engine according to one embodiment of the present invention. In this embodiment, a description will be given, taking a four-stroke cycle internal combustion engine for automobile as an example.

In the drawings, 1 denotes a water-cooled 4-cycle serial 4-cylinder internal combustion engine, and the internal combustion engine 1 has the following rough structure and is mounted on a vehicle with its crankshaft extending in a vehicle back and forth direction. On an upper joint surface 2a of a cylinder block 2, a cylinder head 3 is mounted to be joined by a head bolt (not shown), and on an upper joint surface 3a of the cylinder head 3, a head cover 4 is attachably/detachably mounted.

In the cylinder block 2, four cylinder bores 2b are arranged in parallel in the crankshaft direction, and a piston 5 slidably disposed in each of the cylinder bores 2b is coupled to the crankshaft by a connecting rod (not shown).

In a lower joint surface 3b of the cylinder head 3, a combustion recessed portion 3c forming a combustion chamber is formed, and in the combustion recessed portion 3c, front and rear exhaust valve openings 3d, 3d' and front and rear intake valve openings 3e, 3e' which are disposed on front and rear sides in terms of the vehicle front and rear direction are opened. The exhaust valve openings 3d, 3d' are led out toward one vehicle-widthwise side of the cylinder head 3 from branch exhaust ports 3f, 3f' branching off from a confluent exhaust port 3f. The intake valve openings 3e, 3e' are led out toward the other vehicle-widthwise side of the cylinder head 3 from branch intake ports 3g, 3g' branching off from a confluent intake port 3g.

In a lower portion between the branch intake ports 3g', 3g', a fuel injector 27 is disposed, and the fuel injector 27 injects a fuel directly to an upper portion of the cylinder bore 2b.

The exhaust valve openings 3d, 3d' are opened/closed by valve heads 6a of front and rear exhaust valves 6, 6' respectively, and the intake valve openings 3e, 3e' are opened/closed by valve heads 7a of front and rear intake valves (first and second intake valves) 7, 7' respectively. Valve stems 6b of the exhaust valves 6, 6' and valve stems 7b of the intake valves 7, 7' extend upward so that an angle therebetween become a predetermined angle. The exhaust valves 6, 6' and the intake valves 7, 7' are open/close-driven by a valve driving device 8 disposed in the head cover 4.

This valve driving device 8 has an exhaust valve driving device 9 driving the exhaust valves 6, 6' and an intake valve driving device 10 driving the intake valves 7, 7'. Further, in the valve driving device 8 of this embodiment, there are provided, though not shown, an exhaust-side valve timing varying mechanism variably controlling the opening/closing timings of the exhaust valves 6, 6' and an intake-side valve timing varying mechanism variably controlling the opening/closing timings of the intake valves 7, 7'.

An exhaust camshaft 11 of the exhaust valve driving device 9 is rotatably supported by an exhaust carrier portion 14a and an exhaust cap 14b of a cam carrier 18. Further, an intake camshaft 13 of the intake valve driving device 10 is rotatably supported by an intake carrier portion 15a and an intake cap 15b of the cam carrier 18. The cam carrier 18, in which the exhaust carrier portion 14a and the intake carrier portion 15b are integrally coupled, is attachably/detachably fixed to the upper joint surface 3a of the cylinder head 3 by bolts 14c, 14c, 15c, 15c.

The exhaust valve driving device 9 has: the exhaust camshaft 11; and exhaust rocker arms 12,12 rockably disposed between exhaust cam noses 11a, 11a and the exhaust valves 6, 6', the exhaust cam noses 11a, 11a having the same cam profile and being formed in portions, of the exhaust camshaft 11, facing the two exhaust valves 6, 6'.

Each of the exhaust rocker arms 12 is supported by a rocker shaft 12a fixedly supported by a coupling portion 18b of the cam carrier 18, so as to be capable of rocking up and down. Not only the exhaust carrier portion 14a and the intake carrier portion 15a but the coupling portion 18b of the cam carrier 18 is attachably/detachably mounted to the upper joint surface 3a of the cylinder head 3 by bolts 18a, 18a.

Accompanying the rotation of the exhaust camshaft 11, the exhaust cam noses 11a open/close-drive the exhaust valves 6, 6' via the exhaust rocker arms 12.

In the intake camshaft 13 of the intake valve driving device 10, two cam noses per one front-side intake valve 7 and two cam noses per one rear-side intake valve 7', that is, four first to fourth intake cam noses 13a, 13b, 13c, 13d per one cylinder are formed. The first intake cam nose 13a and the fourth intake cam nose 13d produce a large amount of lift and have the same cam profile (hereinafter, written as front and rear high cams 13a, 13d). The second intake cam nose 13b produces a small amount of lift (hereinafter, written as a low cam 13b), and the third intake cam nose 13c produces the smallest amount of lift, for example, 0.3 mm (hereinafter, written as the lowest cam 13c).

In more detail, the cam profile of the high cams 13a, 13d is set so that the intake valves 7, 7' have an operating angle of 250° or more in terms of crank angle, concretely, about 270°, and have a large maximum amount of lift, concretely, 10.0 mm, as shown in (a) and (c) FIG. 9. Further, a cam profile of the low cam 13b is set so that the front-side intake valve 7 has an operating angle of about 232° and has a small maximum amount of lift, concretely, 6.5 mm, as shown in (b) in FIG. 9. Furthermore, a cam profile of the lowest cam 13c is set so that the rear-side intake valve 7' has a maximum amount of lift of 2 mm or less, concretely, 0.3 mm.

The cam profile of the cam noses 11a, 11a for the exhaust valves 6, 6' is set so that the operating angles and amounts of lift of the exhaust valves 6, 6' become constant, concretely, 232° and 8.5 mm, for instance.

The intake camshaft 13 is rotatably supported by the intake carrier portion 15a and the cam cap 15b which are disposed at a portion between the low cam 13b and the lowest cam 13c. The intake carrier portion 15a and the cam cap 15b are provided independently for each cylinder, and are attachably/detachably fixed to the upper joint surface 3a of the cylinder head 3 by the bolts 15c, 15c.

A high cam rocker arm (first rocker arm) 16a and a low cam rocker arm (second rocker arm) 16b are disposed between the front-side high cam 13a and the front-side intake valve 7 and between the front-side low cam 13b and the front-side intake valve 7. Further, between the lowest cam 13c and the rear-side intake valve 7' and between the high cam 13d and the rear-side intake valve 7', a lowest cam rocker arm (third rocker arm) 16c and a high cam rocker arm (fourth rocker arm) 16d are disposed. The rocker arms 16a, 16b and the rocker arms 16c, 16d are rockably supported by rocker shafts 17a, 17a. The rocker shafts 17a, 17a are fixedly supported by the cam carrier 18. In FIG. 5, reference numeral 21 denotes biasing springs which rotatably bias the high cam rocker arms 16a, 16d so that the high cam rocker arms 16a, 16d are constantly in slidable contact with the high cams 13a, 13d, and reference numeral 22 denotes spacers restricting an axial direction position of the rocker arms.

Here, the high cam rocker arm 16a and the low cam rocker arm 16b are independently rockable, and a boundary surface b where the both rocker arms 16a, 16b are in slidable contact with each other coincides with the center line between the high cam 13a and the low cam 13b, and thus, with an axis a of the front-side intake valve 7. Similarly, a boundary surface b between the lowest cam rocker arm 16c and the high cam rocker arm 16d coincides with an axis a' of the rear-side intake valve 7'.

In a base end portion 16e of each of the rocker arms 16a to 16d, a rocker hole 16f through which the rocker shaft 17a is inserted is formed. Further, on tip portions of the high cam rocker arms 16a, 16d, cam surfaces 16g coming into slidable contact with the high cams 13a, 13d are formed.

In tip portions of the low cam rocker arm 16b and the lowest cam rocker arm 16c, lock holes 16h are formed, and on upper portions of outer peripheral surfaces of the tip portions, cam surfaces 16i coming into slidable contact with the low cam 13b and the lowest cam 13c are formed. Furthermore, pressing surfaces 16j pressing the intake valves 7, 7' are formed in lower portions of the outer peripheral surfaces of the tip portions. On these pressing surfaces 16j, projecting portions 16j' projecting toward the high cam rocker arms 16a, 16d across the axes a, a' of the intake valves 7, 7' are formed. The projecting portions 16j' are located under the high cam rocker arms 16a, 16d.

In the lock holes 16h, 16h of the low cam rocker arm 16b and the lowest cam rocker arm 16c, a first and a second lock pins 19, 19' are reciprocatably disposed/inserted. Further, between the lock pins 19, 19' and the low cam rocker arm 16b and the lowest cam locker arm 16c, biasing springs 20 biasing the lock pins 19, 19' toward the opposite side of the high cam rocker arms 16a, 16d, that is, backward are disposed.

In the intake cam carrier portion 15a, a sleeve for the intake valve 7 (first cylinder portion) 15d and a sleeve for the intake valve 7' (second cylinder portion) 15e are separately pres-fit. In the sleeves 15d, 15e, first and second pistons 23, 23' are reciprocatably inserted respectively.

A first oil chamber c surrounded by the sleeve 15d and the piston 23 is connected to a hydraulic pump (not shown) by a first hydraulic pressure path 24, and in the middle of the first hydraulic pressure path 24, a first hydraulic pressure control valve 25 is disposed. Similarly, a second oil chamber c' surrounded by the sleeve 15e and the piston 23' is connected to the hydraulic pump by a second hydraulic pressure path 24', and in the middle of the second hydraulic pressure channel 24', a second hydraulic pressure control valve 25' is disposed.

A first variable valve system 26 for front-side intake valve which open/close-drives the front-side intake valve 7 by one of the high cam 13a and the low cam 13b and a second variable valve system 26' for rear-side intake valve which open/close-drives the rear-side intake valve 7' by one of the lowest cam 13c and the high cam 13d are structured as described above.

When the hydraulic pressure is supplied to the first oil chamber c, the first piston 23 moves the first lock pin 19 forward, the first lock pin 19 enters an area under the high cam rocker arm 16a, and the high cam 13a open/close-drives the front-side intake valve 7 with a large amount of lift via the high cam rocker arm 16a and the pressing surface 16j of the low cam rocker arm 16b (see FIG. 2, FIGs. 7(b), 7(d)). At this time, the driving force of the high cam 13a is transmitted to the intake valve 7 efficiently owing to the projecting portion 16j' formed on the pressing surface 16j.

On the other hand, when the hydraulic pressure to the first oil chamber c is released, the first lock pin 19 is moved back toward a cylinder axis E by a spring force of the biasing spring 20, so that the first lock pin 19 and the high cam rocker arm 16a are disengaged from each other. Consequently, the high cam rocker arm 16a rotates idle, and the low cam 13b open/close-drives the intake valve 7 with a small amount of lift via the pressing surface 16j of the low cam rocker arm 16b (see FIG. 7(a) and FIG. 7(c)).

Further, when the hydraulic pressure is supplied to the second oil chamber c', the second piston 23' moves the second lock pin 19' forward, the second lock pin 19' enters an area under the high cam rocker arm 16d, and the high cam 13d open/close-drives the rear-side intake valve 7' with a large amount of lift via the high cam rocker arm 16d and the pressing surface 16j of the lowest cam rocker arm 16c (see FIG. 7(c) and FIG. 7(d)). At this time, the driving force of the high cam 13d is transmitted to the intake valve 7' efficiently, owing to the projecting portion 16j' formed on the pressing surface 16j.

On the other hand, when the hydraulic pressure to the second oil chamber c' is released, the second lock pin 19' is moved back toward the cylinder axis E by the spring force of the biasing spring 20, so that the second lock pin 19' and the high cam rocker arm 16d are disengaged from each other. Consequently, the high cam rocker arm 16d rotates idle, and the lowest cam 13c open/close-drives the intake valve 7' with the lowest amount of lift via the pressing surface 16j of the lowest cam rocker arm 16c (see FIG. 7(a) and FIG. 7(b)).

FIG. 8 is a chart showing a relation between operating ranges of the internal combustion engine of this embodiment and amounts of lift of the front and rear intake valves 7, 7'. The operating range of the internal combustion engine 1 of this embodiment is divided into four ranges A, B, C, D shown in FIG. 8, and the supply and discharge of the hydraulic pressure are controlled so as to produce amounts of lift corresponding to the respective operating ranges.

Here, the operating range A represents a low/mid speed/low load operating range, the operating range B represents a mid speed/mid-load operating range, the operating range C represents a mid speed/high load operating range, and the operating range D represents a high speed/high load operating range. It should be noted that such division into these operating ranges is not strictly defined one, but is conceptual one which has a considerable allowance, and this division is not to limit the technical scope of the present invention.

In the operating range A, the hydraulic pressure is supplied to the first oil chamber c and the hydraulic pressure of the second oil chamber c' is released as shown in FIG. 7(b). As a result, the front-side intake valve 7 comes into a high lift state (in this embodiment, for example, 10 mm. The same applies to the description below), and the rear-side intake valve 7' comes into a lowest lift state (0.3 mm). Further, the operating angle of the intake valve 7 becomes 270° (see (a) in FIG. 9) and the operating angle of the intake valve 7' becomes substantially zero.

In the operating range B, the hydraulic pressures of the first oil chamber c and the second oil chamber c' are both released as shown in FIG. 7(a). As a result, the front-side intake valve 7 comes into a low lift state (6.5 mm), and the rear-side intake valve 7' comes into a lowest lift state (0.3 mm). Further, the operating angle of the intake valve 7 becomes 232° (see (b) in FIG. 9) and the operating angle of the intake valve 7' becomes substantially zero.

In the operating range C, the hydraulic pressure of the first oil chamber c is released and the hydraulic pressure is supplied to the second oil chamber c' as shown in FIG. 7(c). As a result, the front-side intake valve 7 comes into a low lift state, and the rear-side intake valve 7' comes into a high lift state. Further, the operating angle of the intake valve 7 becomes 232° (see (b) in FIG. 9) and the operating angle of the intake valve 7' becomes 270° (see (c) in FIG. 9).

In the operating range D, the hydraulic pressure is supplied both to the first oil chamber c and the second oil chamber c' as shown in FIG. 7(d). As a result, the front-side intake valve 7 and the rear-side intake valve 7' both come into a high lift state, and the operating angles of the both become 270°.

As described above, in the internal combustion engine 1 of this embodiment, the first and second valve systems 26, 26' are provided for the two-step switching of the amounts of lift of the two intake valves 7, 7' per cylinder, which enables four-step switching control of the amount of lift of each cylinder. Therefore, it is possible to divide the operating range into the four ranges and to set an amount of lift to a value appropriate for each of the operating ranges. This can realize improvement in fuel efficiency and exhaust gas properties in wide operating ranges and can ensure high output power.

For example, in the operating range A, the front-side intake valve 7 comes into the high lift state, has an operating angle of 270°, and is closed at a timing of 110° after the bottom dead center, while the rear-side intake valve 7' comes into the lowest lift state and has an operating angle of substantially zero. Therefore, the late closing of the intake valve is realized, which can reduce a pumping loss to improve fuel efficiency. Further, since the intake air flows in only from the first intake valve 7 side, a swirl (horizontal swirl) can be generated in the cylinder, leading to better diffusion of an air-fuel mixture, improvement in combustibility, and as a result, stabilization of lean burn. Therefore, it is possible to improve fuel efficiency and exhaust gas properties.

Further, in the operating range B, the front-side intake valve 7 comes into the low lift state, and has an operating angle of 232°, while the rear-side intake valve 7' comes into the lowest lift state and has an operating angle of substantially zero. This can stabilize combustibility owing to the generation of a swirl, resulting in improved fuel efficiency owing to lean burn.

Further, in the operating range C, the front-side intake valve 7 comes into the low lift state and has an operating angle of 232°, while the rear-side intake valve 7' comes into the high lift state and has an operating angle of 270°. This can ensure the generation of a swirl while increasing an air intake, contributing to improvement in the maximum torque.

Further, in the operating range D, the front-side intake valve 7 and the rear-side intake valve 7' both come into the high lift state and have an operating angle of 270°. This can enhance charge efficiency to improve the peak power.

Incidentally, in the description of the above embodiment, the number of the intake valves is two, but the present invention is also applicable to a case where the number of the intake valves is three or more. Further, an applicable range of the present invention is not limited to the intake valve but the present invention is also applicable to an exhaust valve and further applicable to both the intake valve and the exhaust valve.

Further, in the description of the above embodiment, the operating range is divided into the four ranges, but the present invention is also applicable to a case where the operating range is divided into a larger number of operating ranges.
The invention may be embodied in other specific forms without departing from the spirit or essential characteristics thereof.
The present embodiments are therefore to be considered in all respects as illustrative and no restrictive, the scope of the invention being indicated by the appended claims rather than by the foregoing description, and all changes which come within the meaning and range of equivalency of the claims are therefore intended to be embraced therein.

## Claims

1. A four-stroke cycle internal combustion engine comprising:
an intake valve;
an exhaust valve; and
a valve driving device open/close-driving said intake valve and said exhaust valve, wherein:
at least one of said intake valve and said exhaust valve is provided in plurality; and said valve driving device includes a variable valve system performing multi-step switching control of at least one of an opening/closing timing and an amount of lift of said plural valves, each of said valves being controlled independently.

2. The four-stroke internal combustion engine according to claim 1, wherein said variable valve system includes:
a cam nose which is provided in plurality per one valve; and
a transmission switching mechanism transmitting only a driving force of one of the cam noses to the valve.

3. The four-stroke cycle internal combustion engine according to claim 2, wherein the transmission switching mechanism is of a hydraulic type and includes a hydraulic cylinder mechanism, a hydraulic pressure supply path through which a hydraulic pressure is supplied to the hydraulic cylinder mechanism, and a hydraulic pressure control valve controlling the supply and discharge of the hydraulic pressure through the hydraulic pressure supply path.

4. The four-stroke cycle internal combustion engine according to at least one of the preceding claims 1 to 3, wherein:
a first intake valve and a second intake valve are provided; and
said variable valve system comprises:
a first cam nose and a second cam nose provided for the first intake valve;
a third cam nose and a fourth cam nose provided for the second intake valve;
a first transmission switching mechanism of a hydraulic cylinder type transmitting a driving force of one of the first cam nose and the second cam nose to the first intake valve; and
a second transmission switching mechanism of a hydraulic cylinder type transmitting a driving force of one of the third cam nose and the fourth cam nose to the second intake valve.

5. The four-stroke cycle internal combustion engine according to claim 4, wherein the first transmission switching mechanism comprise:
a first and a second rocker arm rockably driven by the first and second cam noses;
a first cylinder portion formed in a cam carrier pivotally supporting a portion, of an intake camshaft, between the second cam noses and the third cam noses;
a first piston slidably disposed in the first cylinder portion; and
a first lock pin reciprocatably driven by the first piston to be engaged with or disengaged from the first or second rocker arm,
the second transmission switching mechanism comprise:
a third and a fourth rocker arm rockably driven by the third and fourth cam noses;
a second cylinder portion formed in a cam carrier pivotally supporting a portion, of an intake camshaft, between the second cam noses and the third cam noses;
a second piston slidably disposed in the second cylinder portions; and
a second lock pin reciprocatably driven by the pistons to be engaged with or disengaged from the third or fourth rocker arm.

6. The four-stroke cycle internal combustion engine according to claims 4 or 5, wherein:
a cam profile of the first cam nose is set so that the first intake valve has a valve operating angle of 250° or more and is closed at a timing of 90° or larger after a bottom dead center, and a cam profile of the third cam nose is set so that an amount of lift of the second intake valve becomes 2 mm or less; and
in a low speed/low load operating range, the variable valve system open/close-drives the first intake valve by the first cam nose and open/close-drives the second intake valve by the third cam nose.

7. The four-stroke cycle internal combustion engine according to at least one of the preceding claims 1 to 6, wherein:
the intake valve is provided in plurality; and at least one of the plural intake valves has a valve operating angle of 250° or more and is closed at a timing of 90° or larger after a bottom dead center, and an
amount of lift of at least one of the remaining intake valves is 2 mm or less.
